(19) **Europäisches Patentamt / European Patent Office / Office européen des brevets**

(11) **EP 2 913 883 A1**

(12) # EUROPEAN PATENT APPLICATION
published in accordance with Art. 153(4) EPC

(43) Date of publication:
**02.09.2015 Bulletin 2015/36**

(21) Application number: **13849285.5**

(22) Date of filing: **24.06.2013**

(51) Int Cl.:
*H01M 14/00* [(2006.01)]  *H01L 31/04* [(2014.01)]

(86) International application number:
**PCT/JP2013/067227**

(87) International publication number:
**WO 2014/064965 (01.05.2014 Gazette 2014/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.10.2012 JP 2012233755**

(71) Applicants:
• **Tokyo University Of Science Educational Foundation Administrative Organization**
**Shinjuku-ku**
**Tokyo 162-8601 (JP)**
• **Toppan Printing Co., Ltd.**
**Tokyo 110-0016 (JP)**

(72) Inventors:
• **WATANABE Naoya**
**Tokyo 162-8601 (JP)**
• **KUDO Tomohiro**
**Tokyo 162-8601 (JP)**
• **OZAWA Hironobu**
**Tokyo 162-8601 (JP)**
• **ARAKAWA Hironori**
**Tokyo 162-8601 (JP)**
• **SHIBAYAMA Naoyuki**
**Tokyo 110-0016 (JP)**

(74) Representative: **TBK**
**Bavariaring 4-6**
**80336 München (DE)**

(54) **PHOTOELECTRODE FOR DYE-SENSITIZED SOLAR CELLS, AND DYE-SENSITIZED SOLAR CELL**

(57)    A photoelectrode for dye-sensitized solar cells of the present invention includes a light-transmitting substrate including a transparent electroconductive layer formed on a light-transmitting base; an adhesion layer formed on the transparent electroconductive layer, the adhesion layer being configured of an electroconductive portion formed of electroconductive particles and a coating layer formed by applying metal alkoxide thereon to cover the electroconductive particles; and a photoelectric conversion layer formed on the adhesion layer by using a photoelectric conversion material in which a sensitizing dye is supported on a functional semiconductor.

FIG. 2

**EP 2 913 883 A1**

**Description**

TECHNICAL FIELD

The present invention relates to a photoelectrode for dye-sensitized solar cells, and to a dye-sensitized solar cell. Priority is claimed on Japanese Patent Application No. 2012-233755, filed October 23, 2012, the content of which is incorporated herein by reference.

BACKGROUND ART

A dye-sensitized solar cell has been developed by Gratzel et al in Switzerland, and has advantages in that the photoelectric conversion efficiency is high and the manufacturing cost is low compared to other general cells. As a dye-sensitized solar cell, for example, a configuration disclosed in Non-Patent Document 1 or Patent Document 1 is known.

The dye-sensitized solar cell disclosed in Patent Document 1 is formed by stacking a photoelectrode for dye-sensitized solar cells (hereinafter, simply referred to as a "photoelectrode") which is configured of a light-transmitting substrate configured by forming a transparent electroconductive layer on a plastic light-transmitting supporting body (a base) and a photoelectric conversion layer (an oxide semiconductor porous film supporting a sensitizing dye) arranged on the light-transmitting substrate, an electrolyte portion, and a counter electrode.

A dye-sensitized solar cell using a plastic base can be bent or rolled up by suitably setting the thickness or the material of base, and thus is expected to be applied to various fields, but when adhesiveness between the photoelectric conversion layer and the light-transmitting substrate is insufficient, the photoelectric conversion layer may peel off from the light-transmitting substrate at the time of performing bending or the like.

In order to solve this problem, Patent Document 2 and 3 disclose a technology in which a solution including a metal alkoxide is applied onto a transparent electroconductive layer and is sintered to form a buffer layer.

PRIOR ART DOCUMENTS

PATENT DOCUMENTS

[Patent Document 1] PCT International Publication No. WO2007/100095
[Patent Document 2] Japanese Unexamined Patent Application, First Publication No. 2011-233376
[Patent Document 3] Japanese Unexamined Patent Application, First Publication No. 2011-142028

NON-PATENT DOCUMENTS

[Non-Patent Document 1] Nature, 353, p. 737-740, 1991

SUMMARY OF THE INVENTION

PROBLEMS TO BE SOLVED BY THE INVENTION

However, the buffer layer described above has low conductivity when the adhesiveness between the photoelectric conversion layer and the light-transmitting substrate increases, and thus resistance of the photoelectrode may increase, and the performance of the dye-sensitized solar cell may be degraded.

The present invention provides a photoelectrode for dye-sensitized solar cells and a dye-sensitized solar cell, in which adhesiveness between a photoelectric conversion layer and a base is increased while a low-resistance state is maintained.

MEANS FOR SOLVING THE PROBLEMS

A first aspect of the present invention is a photoelectrode for dye-sensitized solar cells including a light-transmitting substrate including a transparent electroconductive layer formed on a light-transmitting base; an adhesion layer formed on the transparent electroconductive layer, is the adhesion layer being configured of an electroconductive portion formed of electroconductive particles and a coating layer formed by applying metal alkoxide thereon to cover the electroconductive particles; and a photoelectric conversion layer formed on the adhesion layer by using a photoelectric conversion material in which a sensitizing dye is supported on a functional semiconductor.

The adhesion layer may have a porous structure.

In addition, the base may be formed of plastic.

Another photoelectrode for dye-sensitized solar cells of the present invention includes a metallic base; an adhesion layer formed on the base, the adhesion layer being configured of an electroconductive portion formed of electroconductive particles and a coating layer formed by applying metal alkoxide thereon to cover a plurality of electroconductive particles; and a photoelectric conversion layer formed on the adhesion layer by using a photoelectric conversion material in which a sensitizing dye is supported on a functional semiconductor.

The adhesion layer may have a porous structure.

In addition, the base may be formed of titanium or stainless steel.

In the other photoelectrode for dye-sensitized solar cells of the present invention, the thickness of the adhesion layer may be less than or equal to 5 micrometers.

A dye-sensitized solar cell which is a second aspect of the present invention includes the photoelectrode for dye-sensitized solar cells of the present invention.

Effects of Invention

According to the photoelectrode for dye-sensitized solar cells and the dye-sensitized solar cell of the present invention, even when adhesiveness between the photoelectric conversion layer and the base is increased, it is possible to make resistance low, and to improve cell performance.

BRIEF DESCRIPTION OF THE DRAWINGS

FIG. 1 is a cross-sectional view schematically illustrating a cell configuring a dye-sensitized solar cell provided with a photoelectrode for dye-sensitized solar cells of the present invention.

FIG. 2 is a cross-sectional view schematically illustrating the photoelectrode of the dye-sensitized solar cell.

FIGS. 3(a) to 3(c) are diagrams illustrating a manufacturing step of the photoelectrode.

FIG. 4 is an image (acceleration voltage of 1.5 kV) of an adhesion layer obtained by using a scanning electron microscope.

FIG. 5 is an image (acceleration voltage of 3.0 kV) of an adhesion layer obtained by using a scanning electron microscope.

FIG. 6 is a cross-sectional view schematically illustrating a cell configuring a dye-sensitized solar cell provided with another photoelectrode for dye-sensitized solar cells of the present invention.

EMBODIMENTS FOR CARRYING OUT THE INVENTION

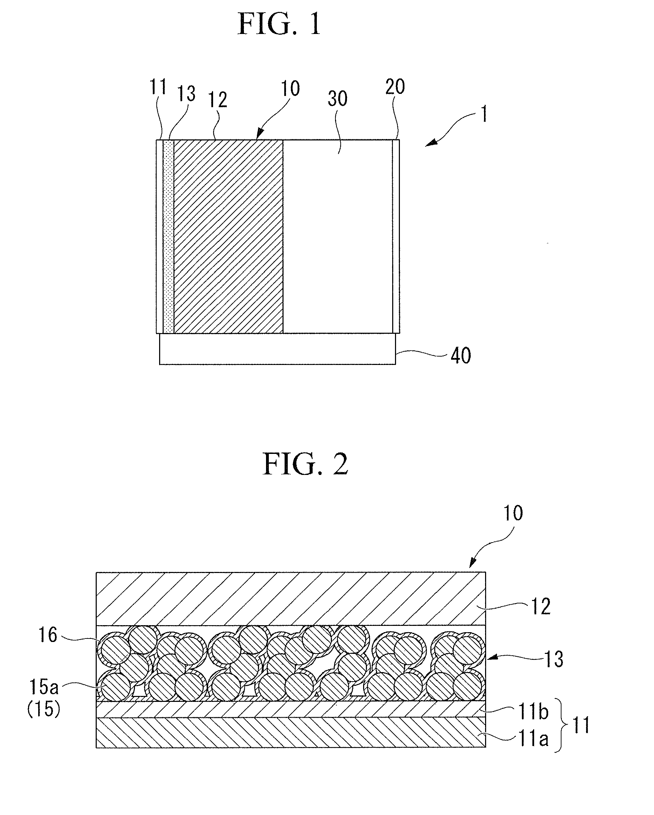

Hereinafter, an embodiment of the present invention will be described with reference to FIG. 1 and FIG. 2.

FIG. 1 is a cross-sectional view schematically illustrating a cell 1 configuring a dye-sensitized solar cell of this embodiment. The cell 1 is configured by arranging a photoelectrode 10 of the present invention and a counter electrode 20 to face each other across an electrolyte portion 30.

FIG. 2 is a cross-sectional view schematically illustrating the photoelectrode 10. The photoelectrode 10 functions as a negative electrode in the cell 1, and includes a light-transmitting substrate 11 in which a transparent electroconductive layer 11b is formed on one surface of a light-transmitting base 11a, a photoelectric conversion layer 12 formed on the transparent electroconductive layer 11b, and an adhesion layer 13 formed between the transparent electroconductive layer 11b and the photoelectric conversion layer 12 in order to improve adhesiveness between the transparent electroconductive layer 11b and the photoelectric conversion layer 12.

As the base 11 a, a base formed of various materials such as glass and plastic is able to be used, and as a base formed of plastic, for example, a plate-shaped or a film-shaped cycloolefin-based polymer, a plate-shaped or a film-shaped acrylic urea-based polymer, a plate-shaped or a film-shaped polyester, a plate-shaped or a film-shaped polyethylene naphthalate, and the like are preferably used from a viewpoint of translucency, thermal resistance, a chemical resistance property, or the like. When plastic is used as the base 11a, it is possible to impart flexibility to the photoelectrode 10, and it is possible to bend or roll up the photoelectrode 10.

As the transparent electroconductive layer 11b, for example, indium-tin compound oxide (ITO), tin oxide doped with fluorine (FTO), and the like are able to be used.

The photoelectric conversion layer 12 is formed of a known photoelectric conversion material in which a sensitizing dye is supported on a functional semiconductor. As the functional semiconductor, for example, an oxide semiconductor such as $TiO_2$, $SnO$, $ZnO$, $WO_3$, $Nb_2O_5$, $In_2O_3$, $ZrO_2$, $Ta_2O_5$ and $TiSrO_3$; a sulfide semiconductor such as

$CdS$, $ZnS$, $In_2S$, $PbS$, $Mo_2S$, $WS_2$, $Sb_2S_3$, $Bi_2S_3$, $ZnCdS_2$, and $CuS_2$; a metal chalcogenide such as $CdSe$, $In_2Se_2$, $WSe_2$, $PbSe$, and $CdTe$; an element semiconductor such as $GaAs$, $Si$, $Se$, and $InP$, and the like are included, and for example, a composite body including two or more thereof such as a composite body of $SnO$ and $ZnO$, and a composite body of $TiO_2$ and $Nb_2O_5$ is able to be used. In addition, a type of the semiconductor is not limited thereto, and a semiconductor in which two or more types of semiconductor are combined is able to be used.

Among them, oxides of Ti, Zn, Sn, Nb, and the like are preferable, and $TiO_2$ (titania) is especially preferable.

The sensitizing dye is not particularly limited insofar as the sensitizing dye exhibits a sensitization action, and an Ru complex such as an N3 complex, an N719 complex (an N719 dye), an Ru terpyridine complex (a black dye), and an Ru diketonate complex; an organic dye such as a coumarin-based dye, a merocyanine-based dye, and a polyene-based dye; a metalloporphyrin-based dye, a phthalocyanine dye, and the like are able to be included as the sensitizing dye, and among them, an Ru complex is preferably included, in particular, an N719 dye and a black dye having a wide absorption spectrum in a visible region, and thus are preferably included.

The N719 dye is a compound represented by ($RuL_2(NCS)_2$•2TBA), and the black dye is a compound shown by ($RuL'_1(NCS)_3$•2TBA). Here, L is 4,4'-dicarboxy-2,2'-bipyridine, L' is 4,4',4"-tetra-carboxy-2,2',2"-terpyridine, and TBA is a tetrabutyl ammonium cation. The dyes are able to be used independently, or are able to be used by mixing two or more dyes.

Furthermore, when the sensitizing dye is supported on the functional semiconductor, the sensitizing dye may be supported on the adhesion layer 13. When the sensitizing dye is supported on the adhesion layer, a performance of the dye-sensitized solar cell is improved.

The adhesion layer 13 includes an electroconductive portion 15 formed of electroconductive particles 15a, and a coating layer 16 which is formed by applying metal alkoxide thereon and covers a plurality of electroconductive particles 15a being in contact with each other.

At least a part of the electroconductive portion 15 is electrically connected to both of the transparent electroconductive layer 11 b and the photoelectric conversion layer 12, and the coating layer 16 is arranged so as to cover a group of electroconductive particles 15a being in contact with each other. As the electroconductive particles for forming the electroconductive portion 15, various metals and oxides thereof are able to be included, and for example, titania and the like are preferable.

The coating layer 16 is formed by applying metal alkoxide thereon, and then by removing the alkoxide through cleaning using a solvent, or sintering, drying, or the like. A metal included in the metal alkoxide may be identical to a material of the electroconductive particles forming the electroconductive portion 15, or may be different from the material.

When a heating treatment such as sintering is performed at the time of forming the coating layer 16, a suitable temperature is set according to the material of the base 11. For example, when the base 11 is formed of glass, the temperature is able to be less than or equal to 700°C, preferably less than or equal to 600°C, and more preferably less than or equal to 550°C. In addition, when the base 11 is formed of plastic, for example, the temperature is able to be less than or equal to 150°C. Furthermore, when the base 11 is formed of metal (described later), it is preferable that the heating treatment be performed at less than or equal to 500°C in order to avoid oxidation of the metal.

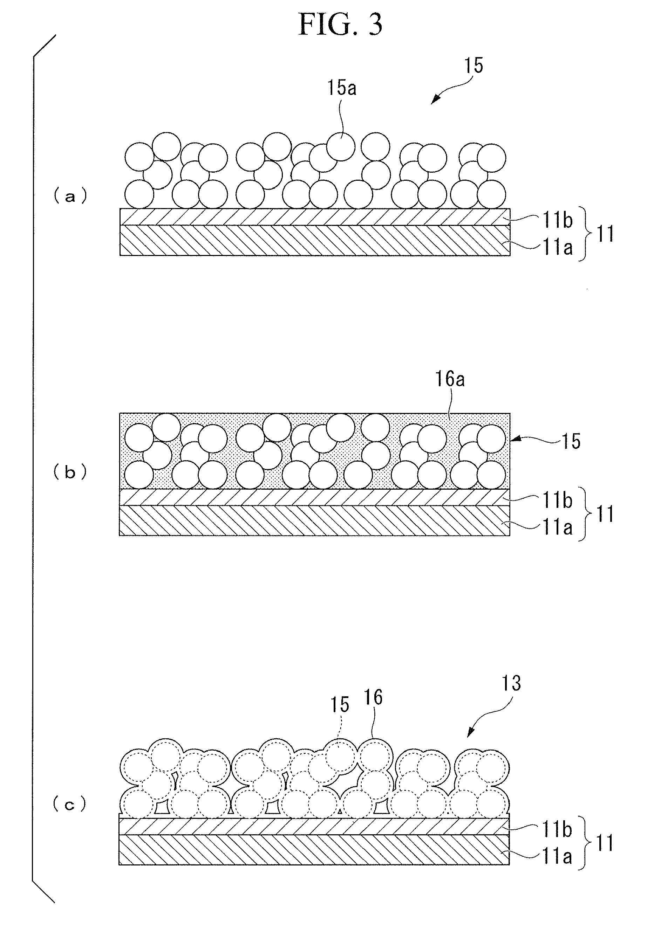

The adhesion layer 13 in which the electroconductive portion 15 and the coating layer 16 are arranged as described above is able to be formed by various methods. In FIG. 3(a) to FIG. 3(c), an example of a forming step of the adhesion layer 13 is illustrated.

For example, first, the electroconductive particles 15a for forming the electroconductive portion 15 are applied onto the transparent electroconductive layer 11 b in a state of a paste or a dispersion medium or are arranged on the transparent electroconductive layer 11 b by printing or the like, a solvent or the like is removed by sintering or the like, and the electroconductive portion 15 is arranged as illustrated in FIG. 3(a). At this time, the electroconductive portion may be pressurized, as necessary. After that, as illustrated in FIG. 3(b), metal alkoxide 16a is applied onto the electroconductive portion 15, then the alkoxide is removed by cleaning, sintering, drying, or the like, and thus as illustrated in FIG. 3(c), the adhesion layer 13 in which a plurality of electroconductive particles 15a are covered with the coating layer 16 is able to be formed. The formed adhesion layer 13 may have a porous structure such as a mesoporous structure or a three-dimensional network structure including a plurality of fine pores inside.

In addition, as another step, the adhesion layer 13 is also able to be formed by mixing the electroconductive particles 15a for forming the electroconductive portion 15 into the metal alkoxide in advance, then by arranging the mixed material on the transparent electroconductive layer 11b, and by performing a treatment such as sintering.

However, it should be noted that when only the metal alkoxide is arranged on the transparent electroconductive layer 11b, and a solvent or the like is removed, a dense film only including a material of the coating layer may be formed, and the electroconductive portion 15 may not be able to be arranged as described above, and thus the adhesion layer 13 may not be able to be formed.

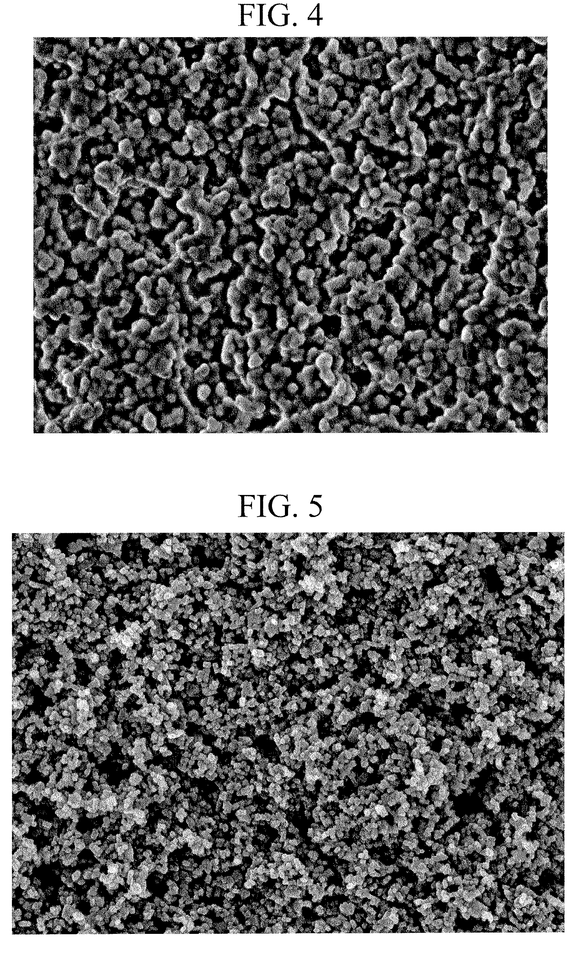

FIG. 4 and FIG. 5 are observed images (magnifying power of 50000 times) of the adhesion layer 13 obtained by using a scanning electron microscope (SEM). In FIG. 4, the observation is performed at an acceleration voltage of 1.5 kilovolts (kV), and thus the coating layer is able to be observed, but when the acceleration voltage exceeds 3.0 kV, an electron beam passes through the coating layer, and thus as illustrated in FIG. 5, the interior electroconductive particles are able to be observed.

The counter electrode 20 functions as a positive electrode in the cell 1, and is able to be formed by supporting a substance having a function of reducing an electrolyte, for example, a metal such as platinum, electroconductive polymer, carbon, or the like on a substrate formed of an electroconductive metal oxide such as ITO and FTO, or a metal. In general, the counter electrode 20 may be configured by disposing an electroconductive film formed of a metal or carbon, and the electroconductive polymer described above on an electroconductive support, or on a support including an electroconductive layer which is identical to that of the electroconductive support, but it is not necessary to include the support insofar as sufficient strength and sealing properties are able to be obtained.

The electrolyte portion 30 may be in any state of liquid, solid, a solidified substance, and an ambient temperature molten salt. The thickness of the electrolyte portion 30 may be suitably set, and for example, is able to be 1 $\mu$m to 100 $\mu$m

In addition, as the electrolyte portion, a cobalt complex may be used. When a cobalt complex is used, corrosion of metal hardly occurs compared to a case where iodine is used, and thus it is possible to use metal wiring or the like inside the dye-sensitized solar cell.

The photoelectrode 10 and the counter electrode 20 are separately arranged by placing the photoelectric conversion layer 12 toward the counter electrode 20, the electrolyte portion 30 is arranged between the photoelectrode 10 and the counter electrode 20, and the transparent electroconductive layer 11 b and the counter electrode 20 of the photoelectrode are electrically connected to each other by wiring 40, and thus the cell 1 is completed.

In the photoelectrode 10 of the cell 1 of this embodiment configured as described above, the coating layer 16 of the adhesion layer 13 is chemically bonded to the transparent electroconductive layer 11 b and the photoelectric conversion layer 12, and thus adhesiveness between the light-transmitting substrate 11 and the photoelectric conversion layer 12 increases.

It is not necessary that conductivity of the coating layer 16 formed as described above be high, but the electroconductive portion 15 is arranged on the adhesion layer 13, and thus an increase in electric resistance of the photoelectrode 10 is suppressed by the electroconductive portion 15, and a decrease in cell performance of the cell 1 is suppressed.

That is, the adhesion layer 13 includes the electroconductive portion 15 and the coating layer 16, and thus it is possible to increase adhesiveness between the light-transmitting substrate 11 and the photoelectric conversion layer 12 without increasing electrical resistance of the photoelectrode 10. Therefore, when the base 11a of the light-transmitting substrate 11 is formed of plastic in order to impart flexibility to the photoelectrode, the photoelectric conversion layer 12 is advantageously prevented from being peeled off from the light-transmitting substrate 11 at the time of being bent or rolled up. As a result, it is possible to contribute greatly to configuring the cell 1 in which both usability and a high cell performance are realized.

In addition, since the coating layer 16 covers the transparent electroconductive layer 11b, the adhesion layer 13 is in contact with the light-transmitting substrate 11 at a surface, and thus a state where adhesiveness is high is preferably maintained.

Further, the adhesion layer 13 has a porous structure, and the coating layer 16 covers a plurality of electroconductive particles 15a, and thus it is difficult for a group of covered electroconductive particles to be pulled apart, and the group behaves as one unit. Therefore, deformation occurring at the time of performing bending or rolling up is partially absorbed, and thus it is possible to reduce a load with respect to the photoelectric conversion layer.

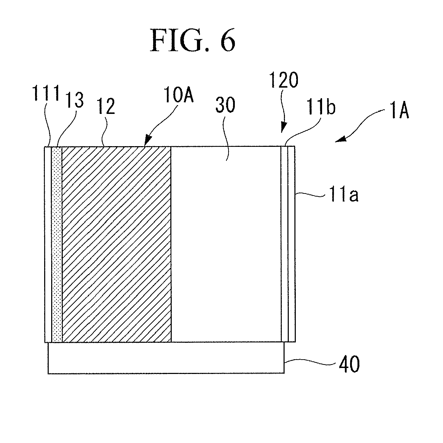

Furthermore, in the photoelectrode of the present invention, a metallic base is able to be used instead of the light-transmitting substrate. In this case, it is not necessary that an electroconductive layer be disposed unlike the light-transmitting substrate. In FIG. 6, a cell 1A using a photoelectrode 10A in which a metal base 111 is used is illustrated. In this case, a counter electrode 120 which is configured to have light transparency by using the base 11a and a transparent electroconductive layer 11b may be used. At this time, a catalytic layer configured of platinum or the like may be formed on the transparent electroconductive layer 11b, as necessary.

The photoelectrode and the dye-sensitized solar cell of the present invention will be further described by using Examples. First, Examples and Comparative Examples using a light-transmitting substrate will be described.

(Example 1)

(Preparation of Photoelectrode 1)

As the light-transmitting substrate 11, a substrate in which the transparent electroconductive layer 11 b formed of ITO was formed on one surface of a PEN film (thickness of 200 $\mu$m) as the base 11a was used. Titania particles dispersed in a solvent were applied onto the transparent electroconductive layer 11b of the light-transmitting substrate 11, then were dried at 25°C for 30 minutes, and were pressurized at a pressure of 100 megapascals (MPa), and thus the electroconductive portion 15 was arranged. The thickness of the electroconductive portion 15 was 200 nanometers (nm).

Next, as metal alkoxide, titanium tetraisopropoxide was applied onto the electroconductive portion 15, and was dried at 25°C for 30 minutes. After that, the titanium tetraisopropoxide was cleaned by using 1-propanol, and thus the coating layer 16 was formed. Thus, the adhesion layer 13 was formed on the transparent electroconductive layer 11b of the light-transmitting substrate 11.

Subsequently, a paste in which titania particles having an average particle diameter of 20 nm and titania particles having an average particle diameter of 100 nm were mixed was applied onto the adhesion layer 13, and was pressurized at a pressure of 100 MPa, and thus a functional semiconductor layer was prepared. An N719 dye as the sensitizing dye was supported on the functional semiconductor layer, and thus the photoelectric conversion layer 12 was formed.

Furthermore, an ethanol suspension liquid including target titania particles was applied onto a slide glass using a doctor blade method and was dried, then an XRD pattern was measured, and a half peak width was obtained from the obtained XRD pattern, and thus the average particle diameter of the titania particles was calculated by using the Scherrer equation ($D = K \times \lambda / \beta cos\theta$). Here, in the equation described above, D is a length of a crystallite, $\beta$ is a half peak width, $\theta$ is a diffraction angle, K is 0.94, and $\lambda$ is 1.5418.

In addition, the Scherrer equation has a large error when the average particle diameter exceeds 50 nm, and thus when the average particle diameter exceeded 50 nm, the following method was used. That is, the ethanol suspension liquid was applied onto the slide glass by using the doctor blade method and was dried, then was imaged by using an SEM, and an arithmetic mean of particle diameters of the particles obtained in an image was acquired as the average particle diameter.

(Preparation of Dye-Sensitized Solar Cell)

As the counter electrode 20, an electrode in which platinum was deposited on a Ti plate having a thickness of 100 $\mu$m was used.

As the electrolyte portion 30, an acetonitrile solution in which iodine, lithium iodide, 1,2-dimethyl-3-propyl imidazolium iodide, and t-butylpyridine were dissolved was used. The solution was obtained by dissolving iodine, lithium iodide, 1,2-dimethyl-3-propyl imidazolium iodide, and t-butylpyridine in acetonitrile at respectively 0.05 M, 0.1 M, 0.6 M, and 0.5 M under a nitrogen atmosphere.

In the photoelectrode 1 described above, an insulating spacer having a thickness of 50 $\mu$m, and the counter electrode 20 were sequentially combined, and a solution for forming the electrolyte portion 30 was injected between the photoelectrode and the counter electrode 20 by using a microsyringe, and thus a dye-sensitized solar cell of Example 1 was prepared.

(Example 2)

(Preparation of Photoelectrode 2)

As the light-transmitting substrate 11, a substrate in which the transparent electroconductive layer 11 b formed of ITO was formed on one surface of a PEN film (thickness of 200 $\mu$m) as the base 11a was used. Titania particles dispersed in a solvent were applied onto the transparent electroconductive layer 11b of the light-transmitting substrate 11, then were dried at 25°C for 30 minutes, and were pressurized at a pressure of 100 MPa, and thus the electroconductive portion 15 was arranged. The thickness of the electroconductive portion 15 was 2000 nm.

Except for this, a photoelectrode 2 was prepared in the same step as that in Example 1.

(Preparation of Dye-Sensitized Solar Cell)

A dye-sensitized solar cell of Example 2 was prepared in the same step as that in Example 1 except that the photoelectrode 2 was used instead of the photoelectrode 1.

(Example 3)

(Preparation of Photoelectrode 3)

As the light-transmitting substrate 11, a substrate in which the transparent electroconductive layer 11b formed of ITO was formed on one surface of a PEN film (thickness of 200 $\mu$m) as the base 11a was used. Titania particles dispersed in a solvent were applied onto the transparent electroconductive layer 11b of the light-transmitting substrate 11, then were dried at 25°C for 30 minutes, and were pressurized at a pressure of 100 MPa, and thus the electroconductive portion 15 was arranged. The thickness of the electroconductive portion 15 was 5000 nm.

Except for this, a photoelectrode 3 was prepared in the same step as that in

Example 1.

(Preparation of Dye-Sensitized Solar Cell)

A dye-sensitized solar cell of Example 3 was prepared in the same step as that in Example 1 except that the photoelectrode 3 was used instead of the photoelectrode 1.

(Comparative Example 1)

(Preparation of Photoelectrode A1)

As the light-transmitting substrate 11, a substrate in which the transparent electroconductive layer 11 b formed of ITO was formed on one surface of a PEN film (thickness of 200 $\mu$m) as the base 11a was used. Titania particles dispersed in a solvent were applied onto the transparent electroconductive layer 11b of the light-transmitting substrate 11, then were dried at 25°C for 30 minutes, and were pressurized at a pressure of 100 MPa, and thus the electroconductive portion 15 was arranged. The thickness of the electroconductive portion 15 was 200 nm.

Subsequently, a paste in which titania particles having an average particle diameter of 20 nm and titania particles having an average particle diameter of 100 nm were mixed was applied onto the electroconductive portion 15, and was pressurized at a pressure of 100 MPa, and thus a functional semiconductor layer was prepared.

A photoelectrode A1 was prepared through the processes described above.

(Preparation of Dye-Sensitized Solar Cell)

A dye-sensitized solar cell of Comparative Example 1 was prepared in the same step as that in Example 1 except that the photoelectrode A1 was used instead of the photoelectrode 1.

(Comparative Example 2)

(Preparation of Photoelectrode A2)

As the light-transmitting substrate 11, a substrate in which the transparent electroconductive layer 11 b formed of ITO was formed on one surface of a PEN film (thickness of 200 $\mu$m) as the base 11a was used. Titania particles dispersed in a solvent were applied onto the transparent electroconductive layer 11b of the light-transmitting substrate 11, then were dried at 25°C for 30 minutes, and were pressurized at a pressure of 100 MPa, and thus the electroconductive portion 15 was arranged. The thickness of the electroconductive portion 15 was 5000 nm.

Except for this, a photoelectrode A2 was prepared in the same step as that in Example 1.

(Preparation of Dye-Sensitized Solar Cell)

A dye-sensitized solar cell of Comparative Example 2 was prepared in the same step as that in Example 1 except that the photoelectrode A2 was used instead of the photoelectrode 1.

(Comparative Example 3)

(Preparation of Photoelectrode A3)

As the light-transmitting substrate 11, a substrate in which the transparent electroconductive layer 11 b formed of ITO was formed on one surface of a PEN film (thickness of 200 $\mu$m) as the base 11a was used. Titanium tetraisopropoxide as metal alkoxide was applied onto the transparent electroconductive layer 11b of the light-transmitting substrate 11, and was dried at 25°C for 30 minutes. After that, the titanium tetraisopropoxide was cleaned by using 1-propanol, and thus a dense layer configured of a material of the coating layer 16 was formed.

Subsequently, a paste in which titania particles having an average particle diameter of 20 nm and titania particles having an average particle diameter of 100 nm were mixed was applied onto the dense layer described above, and was pressurized at a pressure of 100 MPa, and thus a functional semiconductor layer was prepared.

A photoelectrode A3 was prepared through the processes described above.

(Preparation of Dye-Sensitized Solar Cell)

A dye-sensitized solar cell of Comparative Example 3 was prepared in the same step as that in Example 1 except that the photoelectrode A3 was used instead of the photoelectrode 1.

(Comparative Example 4)

(Preparation of Photoelectrode A4)

As the light-transmitting substrate 11, a substrate in which the transparent electroconductive layer 11b formed of ITO was formed on one surface of a PEN film (thickness of 200 $\mu$m) as the base 11a was used. A paste in which titania particles having an average particle diameter of 20 nm and titania particles having an average particle diameter of 100 nm were mixed was applied onto the transparent electroconductive layer 11b of the light-transmitting substrate 11, and was pressurized at a pressure of 100 MPa, and thus a functional semiconductor layer was prepared.

A photoelectrode A4 was prepared through the processes described above.

(Preparation of Dye-Sensitized Solar Cell)

A dye-sensitized solar cell of Comparative Example 4 was prepared in the same step as that in Example 1 except that the photoelectrode A4 was used instead of the photoelectrode 1.

Hereinafter, Examples and Comparative Examples using a metal substrate as a base will be described.

(Example B1)

(Preparation of Photoelectrode B1)

A photoelectrode B1 was prepared in the same step as that in Example 1 except that a metal substrate (thickness of 50 $\mu$m) formed of Ti was used instead of the light-transmitting substrate 11.

(Preparation of Dye-Sensitized Solar Cell)

The photoelectrode B 1 was used instead of the photoelectrode 1. As the counter electrode, an electrode in which a transparent electroconductive layer configured of ITO was formed on one surface of a PEN film (thickness of 200 $\mu$m) was used. A platinum layer as a catalytic layer was formed on the transparent electroconductive layer by deposition.

Except for this, a dye-sensitized solar cell of Example B1 was prepared in the same step as that in Example 1.

(Example B2)

(Preparation of Photoelectrode B2)

A photoelectrode B2 was prepared in the same step as that in Example 2 except that a metal substrate (thickness of 50 $\mu$m) formed of Ti was used instead of the light-transmitting substrate 11.

(Preparation of Dye-Sensitized Solar Cell)

A dye-sensitized solar cell of Example B2 was prepared in the same step as that in Example B 1 except that the photoelectrode B2 was used instead of the photoelectrode B1.

(Example B3)

(Preparation of Photoelectrode B3)

A photoelectrode B3 was prepared in the same step as that in Example 3 except that a metal substrate (thickness of 50 $\mu$m) formed of Ti was used instead of the light-transmitting substrate 11.

(Preparation of Dye-Sensitized Solar Cell)

A dye-sensitized solar cell of Example B3 was prepared in the same step as that in Example B 1 except that the photoelectrode B3 was used instead of the photoelectrode B1.

(Comparative Example b1)

(Preparation of Photoelectrode b1)

A photoelectrode b1 was prepared in the same step as that in Comparative Example 1 except that a metal substrate (thickness of 50 $\mu$m) formed of Ti was used instead of the light-transmitting substrate 11.

(Preparation of Dye-Sensitized Solar Cell)

A dye-sensitized solar cell of Comparative Example b1 was prepared in the same step as that in Example B 1 except that the photoelectrode b 1 was used instead of the photoelectrode B 1.

(Comparative Example b2)

(Preparation of Photoelectrode b2)

A photoelectrode b2 was prepared in the same step as that in Comparative Example 2 except that a metal substrate (thickness of 50 $\mu$m) formed of Ti was used instead of the light-transmitting substrate 11.

(Preparation of Dye-Sensitized Solar Cell)

A dye-sensitized solar cell of Comparative Example b2 was prepared in the same step as that in Example B 1 except that the photoelectrode b2 was used instead of the photoelectrode B 1.

(Comparative Example b3)

(Preparation of Photoelectrode b3)

A photoelectrode b3 was prepared in the same step as that in Comparative Example 3 except that a metal substrate (thickness of 50 $\mu$m) formed of Ti was used instead of the light-transmitting substrate 11.

(Preparation of Dye-Sensitized Solar Cell)

A dye-sensitized solar cell of Comparative Example b3 was prepared in the same step as that in Example B 1 except that the photoelectrode b3 was used instead of the photoelectrode B 1.

(Comparative Example b4)

(Preparation of Photoelectrode b4)

A photoelectrode b4 was prepared in the same step as that in Comparative Example 4 except that a metal substrate (thickness of 50 $\mu$m) formed of Ti was used instead of the light-transmitting substrate 11.

(Preparation of Dye-Sensitized Solar Cell)

A dye-sensitized solar cell of Comparative Example b4 was prepared in the same step as that in Example B 1 except that the photoelectrode b4 was used instead of the photoelectrode B 1.

(Example C1)

(Preparation of Photoelectrode C1)

A photoelectrode C1 was prepared in the same step as that in Example 1 except that a metal substrate (thickness

of 50 μm) formed of SUS304 was used instead of the light-transmitting substrate 11.

(Preparation of Dye-Sensitized Solar Cell)

A dye-sensitized solar cell of Example C1 was prepared in the same step as that in Example B 1 except that the photoelectrode C 1 was used instead of the photoelectrode 1.

(Example C2)

(Preparation of Photoelectrode C2)

A photoelectrode C2 was prepared in the same step as that in Example 2 except that a metal substrate (thickness of 50 μm) formed of SUS304 was used instead of the light-transmitting substrate 11.

(Preparation of Dye-Sensitized Solar Cell)

A dye-sensitized solar cell of Example C2 was prepared in the same step as that in Example B 1 except that the photoelectrode C2 was used instead of the photoelectrode B1.

(Example C3)

(Preparation of Photoelectrode C3)

A photoelectrode C3 was prepared in the same step as that in Example 3 except that a metal substrate (thickness of 50 μm) formed of SUS304 was used instead of the light-transmitting substrate 11.

(Preparation of Dye-Sensitized Solar Cell)

A dye-sensitized solar cell of Example C3 was prepared in the same step as that in Example B 1 except that the photoelectrode C3 was used instead of the photoelectrode B1.

(Comparative Example c1)

(Preparation of Photoelectrode c1)

A photoelectrode c1 was prepared in the same step as that in Comparative Example 1 except that a metal substrate (thickness of 50 μm) formed of SUS304 was used instead of the light-transmitting substrate 11.

(Preparation of Dye-Sensitized Solar Cell)

A dye-sensitized solar cell of Comparative Example c1 was prepared in the same step as that in Example B 1 except that the photoelectrode c 1 was used instead of the photoelectrode B 1.

(Comparative Example c2)

(Preparation of Photoelectrode c2)

A photoelectrode c2 was prepared in the same step as that in Comparative Example 2 except that a metal substrate (thickness of 50 μm) formed of SUS304 was used instead of the light-transmitting substrate 11.

(Preparation of Dye-Sensitized Solar Cell)

A dye-sensitized solar cell of Comparative Example c2 was prepared in the same step as that in Example B 1 except that the photoelectrode c2 was used instead of the photoelectrode B 1.

(Comparative Example c3)

(Preparation of Photoelectrode c3)

A photoelectrode c3 was prepared in the same step as that in Comparative Example 3 except that a metal substrate (thickness of 50 $\mu$m) formed of SUS304 was used instead of the light-transmitting substrate 11.

(Preparation of Dye-Sensitized Solar Cell)

A dye-sensitized solar cell of Comparative Example c3 was prepared in the same step as that in Example B 1 except that the photoelectrode c3 was used instead of the photoelectrode B 1.

(Comparative Example c4)

(Preparation of Photoelectrode c4)

A photoelectrode c4 was prepared in the same step as that in Comparative Example 4 except that a metal substrate (thickness of 50 $\mu$m) formed of SUS304 was used instead of the light-transmitting substrate 11.

(Preparation of Dye-Sensitized Solar Cell)

A dye-sensitized solar cell of Comparative Example c4 was prepared in the same step as that in Example B 1 except that the photoelectrode c4 was used instead of the photoelectrode B 1.

As described above, the photoelectrodes of Comparative Examples 1, 2, b1, b2, c1, and c2 have a configuration in which the coating layer is not included, the photoelectrodes of Comparative Examples 3, b3, and c3 have a configuration in which the electroconductive portion is not included, and the photoelectrodes of Comparative Examples 4, b4, and c4 have a configuration in which the coating layer and the electroconductive portion are not included.

(Evaluation 1: Adhesiveness Evaluation of Photoelectrode)

The dye-sensitized solar cells of Examples and Comparative Examples were adhered and fixed to an outer circumferential surface of a 3-inch core (PP, an inner thickness of 50 mm, and a reference outer diameter of 86.5 mm) which is a commercially available cylindrical member such that the photoelectrode was arranged to be an outside of the dye-sensitized solar cells, and were left for 1 hour. After that, the photoelectrode was detached from the 3-inch core and was flattened, a front surface of the photoelectric conversion layer was observed by using a microscope at a magnifying power of 70 times, and peeling off and cracking of the photoelectric conversion layer were evaluated.

(Evaluation 2: Performance Evaluation of Dye-Sensitized Solar Cell)

While the dye-sensitized solar cells of Examples and Comparative Examples were irradiated with pseudo sunlight of AM 1.5 and 100 mW/cm$^2$ by using a "Solar Simulator" (manufactured by Peccell Technologies, Inc.), I-V characteristics were measured by using a "2400 Sourcemeter" (manufactured by KEITHLEY Instruments), and thus values of a short-circuit current, an open-circuit voltage, and a form factor ff were obtained, and photoelectric conversion efficiency was calculated by the following Equation (1) using these values.

$$\text{Equation (1); photoelectric conversion efficiency (\%)} = [\text{short-circuit current value (mA/cm}^2) \times \text{open-circuit voltage value (V)} \times \{\text{form factor ff / incident light (100 mW/cm}^2)\}] \times 100$$

Furthermore, evaluation of cell performance was performed twice in total before and after performing Evaluation 1 described above.
Results of Evaluation 1 are shown in Table 1. Results of Evaluation 2 before performing Evaluation 1 are shown in Table 2, and results of Evaluation 2 after performing Evaluation 1 are shown in Table 3.

[Table 1]

|  | Electroconductive Portion | Coasting Layer | Peeling Oft or Cracking |
|---|---|---|---|
| Example 1 | Presence | Presence | Absence |
| Example 2 | Presence | Presence | Absence |
| Example 3 | Presence | Presence | Absence |
| Comparative Example 1 | Presence | Absence | Presence |
| Comparative Example 2 | Presence | Absence | Presence |
| Comparative Example 3 | Absence | Presence | Absence |
| Comparative Example 4 | Absence | Absence | Presence |
| Example B1 | Presence | Presence | Absence |
| Example B2 | Presence | Presence | Absence |
| Example B3 | Presence | Presence | Absence |
| Comparative Example b1 | Presence | Absence | Presence |
| Comparative Example b2 | Presence | Absence | Presence |
| Comparative Example b3 | Absence | Presence | Absence |
| Comparative Example b4 | Absence | Absence | Presence |
| Example C1 | Presence | Presence | Absence |
| ExampleC2 | Presence | Presence | Absence |
| Example C3 | Presence | Presence | Absence |
| Comparative Example c1 | Presence | Absence | Presence |
| Comparative Example c2 | Presence | Absence | Presence |
| Comparative Example c3 | Absence | Presence | Absence |
| Comparative Example c4 | Absence | Absence | Presence |

[Table 2]

|  | Current mA/cm$^2$ | Voltage V | FF - | Conversion Efficiency % |
|---|---|---|---|---|
| Example 1 | 12.2 | 0.75 | 0.74 | 6.8 |
| Example 2 | 12.2 | 0.75 | 0.74 | 6.8 |
| Example 3 | 12.2 | 0.75 | 0.74 | 6.8 |
| Comparative Example 1 | 11.1 | 0.78 | 0.74 | 6.4 |
| Comparative Example 2 | 11.1 | 0.78 | 0.74 | 6.4 |
| Comparative Example 3 | 3.5 | 0.74 | 0.41 | 1.1 |
| Comparative Example 4 | 12.0 | 0.75 | 0.72 | 6.5 |
| Example B1 | 9.4 | 0.74 | 0.65 | 4.6 |
| Example B2 | 9.4 | 0.74 | 0.65 | 4.6 |
| Example B3 | 9.4 | 0.74 | 0.65 | 4.6 |
| Comparative Example b1 | 9.0 | 0.70 | 0.60 | 3.8 |
| Comparative Example b2 | 9.0 | 0.70 | 0.60 | 3.8 |
| Comparative Example b3 | 3.5 | 0.68 | 0.60 | 1.4 |

(continued)

|  | Current mA/cm$^2$ | Voltage V | FF - | Conversion Efficiency % |
|---|---|---|---|---|
| Comparative Example b4 | 7.0 | 0.77 | 0.72 | 3.9 |
| Example C1 | 9.3 | 0.72 | 0.57 | 3.8 |
| Example C2 | 9.3 | 0.72 | 0.57 | 3.8 |
| Example C3 | 9.3 | 0.72 | 0.57 | 3.8 |
| Comparative Example c1 | 8.7 | 0.70 | 0.55 | 3.3 |
| Comparative Example c2 | 8.7 | 0.70 | 0.55 | 3.3 |
| Comparative Example c3 | 3.0 | 0.68 | 0.50 | 1.0 |
| Comparative Example c4 | 6.1 | 0.70 | 0.48 | 2.1 |

[Table 3]

|  | Current mA/cm$^2$ | Voltage V | FF - | Conversion Efficiency % |
|---|---|---|---|---|
| Example 1 | 12.2 | 0.75 | 0.74 | 6.8 |
| Example 2 | 12.2 | 0.75 | 0.74 | 6.8 |
| Example 3 | 12.2 | 0.75 | 0.74 | 6.8 |
| Comparative Example 1 | 10.9 | 0.02 | 0.25 | 0.06 |
| Comparative Example 2 | 10.9 | 0.02 | 0.25 | 0.06 |
| Comparative Example 3 | 3.5 | 0.74 | 0.41 | 1.1 |
| Comparative Example 4 | 8.2 | 0.02 | 0.25 | 0.04 |
| Example B1 | 9.4 | 0.74 | 0.65 | 4.6 |
| Example B2 | 9.4 | 0.74 | 0.65 | 4.6 |
| Example B3 | 9.4 | 0.74 | 0.65 | 4.6 |
| Comparative Example b1 | 7.0 | 0.02 | 0.25 | 0.04 |
| Comparative Example b2 | 7.0 | 0.02 | 0.25 | 0.04 |
| Comparative Example b3 | 3.5 | 0.68 | 0.60 | 1.4 |
| Comparative Example b4 | 6.7 | 0.05 | 0.25 | 0.08 |
| Example C1 | 9.3 | 0.72 | 0.57 | 3.8 |
| Example C2 | 9.3 | 0.72 | 0.57 | 3.8 |
| Example C3 | 9.3 | 0.72 | 0.57 | 3.8 |
| Comparative Example c 1 | 7.0 | 0.02 | 0.25 | 0.04 |
| Comparative Example c2 | 7.0 | 0.02 | 0.25 | 0.04 |
| Comparative Example c3 | 3.0 | 0.68 | 0.50 | 1.0 |
| Comparative Example c4 | 5.0 | 0.05 | 0.25 | 0.06 |

As shown in Table 1, in Comparative Examples in which the coating layer was not included, peeling off or cracking of the photoelectric conversion layer of the photoelectrode occurred when being wound around a cylindrical outer circumferential surface, but in Examples, peeling off or cracking of the photoelectric conversion layer was not observed. It is considered that this is because adhesiveness of the photoelectric conversion layer with respect to the light-transmitting substrate is improved by the adhesion layer.
As shown in Table 2, in a state before performing Evaluation 1, only the cell performances of Comparative Examples 3, b3, and c3 were low, and the cell performances of the other Examples were approximately identical to each other. It is considered that this is because the dense layer configured of the material of the coating layer was formed between the light-transmitting substrate and the photoelectric conversion layer in each of comparison layers described above, and thus electric resistance increased.

In addition, as shown in Table 3, in a state after performing Evaluation 1, the cell performances of Comparative Examples in which the coating layer was not included were considerably degraded. It is considered that this is because peeling off or cracking of the photoelectric conversion layer occurred. In Examples, all the cell performances were not degraded, and were identical to that before performing Evaluation 1.

In addition, in each Example in which the adhesion layer was included, conversion efficiency was improved compared to that of each Comparative Example which had the same configuration as that of this Example except that the adhesion layer was not included. This is because, in a forming process of the adhesion layer, a surface (an ITO surface, a Ti surface, an SUS304 surface, and the like) exhibiting conductivity in a substrate was nearly covered with the material ($TiO_2$ of the coating layer. It is known that when a substrate having conductivity is directly in contact with iodine, electrons flow to iodine (a reverse electron transfer), and thus a performance is degraded, but when a front surface of the substrate is covered with the material of the coating layer, the substrate avoids being directly in contact with iodine, and thus it is possible to suppress the reverse electron transfer, and conversion efficiency is improved.

In Table 4, results obtained by examining cell performance of a dye-sensitized solar cell in which the adhesion layer was formed of metal species other than titanium are shown. Even when silicon, zinc, aluminum, magnesium, and niobium are used as the metal species, it is possible to preferably form the adhesion layer by using the metal alkoxides shown in Table 4, and thus a high cell performance is obtained.

[Table 4]

| Paste Solvent | Metal Species | Thickness of Generation Layer [$\mu$m] | Current [mAcm$^2$] | Voltage [V] | FF [-] | Conversion Efficiency [%] | Metal Alkoxide |
|---|---|---|---|---|---|---|---|
| Water | Si | 8 | 12.9 | 0.74 | 0.68 | 6.6 | $Si((OCH_3)(CH_3)_3)$ |
| | Zn | 8 | 13.3 | 0.74 | 0.58 | 5.7 | $Zn(OCH_3)CH((CH_3)CO)_2$ |
| | A1 | s | 14.3 | 0.74 | 0.69 | 73 | $Al[OCH(CH_3)_2]_3$ |
| | Mg | 8 | 13.8 | 0.73 | 0.69 | 7.0 | $Mg(OC_2H_5)_2$ |
| | Nb | 8 | 13.7 | 0.74 | 0.71 | 72 | $Nb[OCH(CH_3)_2]_5$ |

As described above, the dye-sensitized solar cell of the present invention has been described by using embodiments and Examples, but the technical scope of the present invention is not limited to the embodiments and the Examples described above, and the combination of the constituents is able to be changed, or each of the constituents is able to be variously changed or deleted without departing from the spirit or scope of the present invention.

Industrial Applicability

The present invention is able to be applied to a dye-sensitized solar cell.

DESCRIPTION OF REFERENCE NUMERAL

1 cell (dye-sensitized solar cell)
10 photoelectrode for dye-sensitized solar cells
11 light-transmitting substrate
11 a base
11b transparent electroconductive layer
12 photoelectric conversion layer
13 adhesion layer
15 electroconductive portion
15a electroconductive particles
16 coating layer

**Claims**

1. A photoelectrode for dye-sensitized solar cells, comprising:

   a light-transmitting substrate including a transparent electroconductive layer formed on a light-transmitting base;
   an adhesion layer formed on the transparent electroconductive layer, the adhesion layer being configured of an electroconductive portion formed of electroconductive particles and a coating layer formed by applying metal alkoxide thereon to cover the electroconductive particles; and
   a photoelectric conversion layer formed on the adhesion layer by using a photoelectric conversion material in which a sensitizing dye is supported on a functional semiconductor.

2. The photoelectrode for dye-sensitized solar cells according to Claim 1,
   wherein the adhesion layer has a porous structure.

3. The photoelectrode for dye-sensitized solar cells according to Claim 1 or 2,
   wherein the base is formed of plastic.

4. A photoelectrode for dye-sensitized solar cells, comprising:

   a metallic base;
   an adhesion layer formed on the base, the adhesion layer being configured of a conductive portion formed of electroconductive particles and a coating layer formed by applying metal alkoxide thereon to cover the electroconductive particles; and
   a photoelectric conversion layer formed on the adhesion layer by using a photoelectric conversion material in which a sensitizing dye is supported on a functional semiconductor.

5. The photoelectrode for dye-sensitized solar cells according to Claim 4,
   wherein the adhesion layer has a porous structure.

6. The photoelectrode for dye-sensitized solar cells according to Claim 4 or 5,
   wherein the base is formed of titanium or stainless steel.

7. The photoelectrode for dye-sensitized solar cells according to any one of Claims 1 to 6,
   wherein the thickness of the adhesion layer is less than or equal to 5 micrometers.

8. A dye-sensitized solar cell comprising the photoelectrode for dye-sensitized solar cells according to any one of Claims 1 to 7.

# FIG. 1

# FIG. 2

# FIG. 3

(a)

15a

15

11b
11a
} 11

(b)

16a

15

11b
11a
} 11

(c)

15  16

13

11b
11a
} 11

FIG. 4

FIG. 5

# FIG. 6

## INTERNATIONAL SEARCH REPORT

International application No.

PCT/JP2013/067227

A. CLASSIFICATION OF SUBJECT MATTER

*H01M14/00*(2006.01)i, *H01L31/04*(2006.01)i

According to International Patent Classification (IPC) or to both national classification and IPC

B. FIELDS SEARCHED

Minimum documentation searched (classification system followed by classification symbols)

H01M14/00, H01L31/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-345125 A (Hitachi Maxell, Ltd.), 14 December 2001 (14.12.2001), entire text; fig. 1 to 7 & JP 2001-345126 A | 1-8 |
| A | JP 11-283682 A (Sumitomo Osaka Cement Co., Ltd.), 15 October 1999 (15.10.1999), entire text; fig. 1 to 3 (Family: none) | 1-8 |
| A | JP 2010-177109 A (Toyota Central Research and Development Laboratories, Inc.), 12 August 2010 (12.08.2010), entire text; fig. 1 to 8 (Family: none) | 1-8 |

| | | |
|---|---|---|
| ☒ Further documents are listed in the continuation of Box C. | ☐ See patent family annex. | |

| | | |
|---|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family | |

| Date of the actual completion of the international search | Date of mailing of the international search report |
|---|---|
| 05 July, 2013 (05.07.13) | 16 July, 2013 (16.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/067227 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-134435 A  (Fuji Photo Film Co., Ltd.),<br>10 May 2002 (10.05.2002),<br>entire text; fig. 1 to 10<br>(Family: none) | 1-8 |
| A | JP 2007-311243 A  (Fujikura Ltd.),<br>29 November 2001 (29.11.2001),<br>entire text; fig. 1 to 2<br>(Family: none) | 1-8 |
| A | JP 2012-146631 A  (Peccell Technologies, Inc.),<br>02 August 2012 (02.08.2012),<br>entire text; fig. 1 to 2<br>(Family: none) | 1-8 |
| A | WO 2009/113342 A1  (Konica Minolta Holdings, Inc.),<br>17 September 2009 (17.09.2009),<br>entire text; fig. 1<br>(Family: none) | 1-8 |
| A | JP 2005-071956 A  (Central Glass Co., Ltd.),<br>17 March 2005 (17.03.2005),<br>entire text; fig. 1 to 2<br>(Family: none) | 1-8 |
| P,A | JP 2012-226830 A  (Sony Corp.),<br>15 November 2012 (15.11.2012),<br>entire text; fig. 1 to 2<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012233755 A
- WO 2007100095 A
- JP 2011233376 A
- JP 2011142028 A

**Non-patent literature cited in the description**

- *Nature,* 1991, vol. 353, 737-740